# EUROPEAN PATENT APPLICATION

(11) **EP 1 245 251 A2**
(43) Date of publication of application: **02.10.2002**
(21) Application number: 02252112.4
(22) Date of filing: 25.03.2002
(51) Int. Cl.: A62B 18/00

(54) **Sensor for pilot mask**

(30) Priority: 29.03.2001 US 821237
(71) Applicant: ROSEMOUNT AEROSPACE INC., Burnsville, MN 55306-4898 (US)
(72) Inventor: Bachinski, Thomas J., Lakeville, Minnesota 55044 (US)
(74) Representative: Cross, Rupert Edward Blount

(57) **Abstract**

A mask (11) is shown which is used for providing air or oxygen for breathing. The mask (16) has a differential pressure sensor (30) for providing a signal to control oxygen or airflow to the mask (16). In one form the sensor is in the wall of the mask or in a wall of a supply tube, to sense the differences between ambient pressure, for example in the cabin (10) of an aircraft, and pressure in the breathing space (24) on the interior of the mask (16). Reduction in the pressure on the interior of the mask (16) can indicate that a pilot (12) is not receiving adequate oxygen, or is being subjected to stresses that may result in blackouts or red outs. The signal from the differential pressure sensor (30) is used to control the flow of oxygen to the mask (16), and also can be used for controlling the pressure of pressurized suits (14) worn by the pilot (12). The pressure sensor (30) output also can be used to maintain a higher pressure on the interior of the mask (16) to insure ambient air does not contaminate the air being breathed.

## Description

### BACKGROUND OF THE INVENTION

The present invention relates to mounting a pressure sensor on a mask worn by pilots of high performance aircraft, such as an oxygen mask, which also includes communication function connectors. The sensor comprises a differential pressure sensor that monitors the pilot breathing pressure and supply air/oxygen pressure in the mask breath cavity relative to cabin pressure and regulates flow of oxygen or other gases to the mask, as well as regulating other personal environmental control devices, such as a pressure suit.

In the operation of high performance aircraft it is known that when a pilot is near blackout or "redout" conditions, the breath pressure reduces, and there is a need for control of the flow of oxygen, or of oxygen pressure. In many instances it is also desirable to control the pressure of a G-suit to overcome the effect of excessive G-forces on the body.

### SUMMARY OF THE INVENTION

The present invention provides a mask having a mask wall, a gas supply tube with a tube wall connected to the mask to be worn in conditions where pressures on an exterior of the mask and an interior of the mask are to be monitored, a differential pressure sensor mounted on one of the walls, said differential pressure sensor having a sensing surface open to the exterior of the mask, and a second pressure sensing surface open to the interior of the mask to provide a signal indicating differential in pressure between the exterior and interior of the mask.

The present invention also provides a mask for a pilot of high performance aircraft, the mask being configured to fit onto a face of a wearer and having a breath cavity on an interior thereof, a differential pressure sensor mounted in the mask and having two sensing surfaces which sense the differential in pressure between the breath cavity and an exterior of the mask.

The present invention further provides a mask and supply tube having an interior for containing gas for breathing by a wearer, the supply tube being connected to the mask, a supply of a gas connected to the supply tube, a controller for regulating the flow of gas to the interior of the mask, a differential pressure sensor mounted on one of the tube and the mask for providing a signal based upon differentials in pressure indicating flow of gas to the supply tube and mask, the signal being provided to the controller.

The present invention relates to mounting a differential pressure sensor on or in a mask used where supplementary air or oxygen is needed by a user. A specific example is an oxygen mask, which also includes all communication functions, worn by pilots, primarily fighter pilots. The differential pressure sensor monitors the air pressure in the mask relative to ambient or cabin pressure, and regulates flow of oxygen or other gases to the mask, as well as regulating other conditions such as pressure in a pressure suit. The pressure sensors of the present invention can also be used to determine if the interior pressure in the mask of a fire fighter will purge smoke to the atmosphere, as well as providing adequate oxygen or air to the mask.

In the operation of high performance aircraft it is known that when a pilot is near blackout conditions or when the pressure of breathing reduces, there is either a need for increased flow of oxygen or increased oxygen pressure or both. In many instances also it is desirable to change the pressure of a G-suit (pressurized suit) to provide for overcoming the effect of excessive G-force on the body.

A condition known as "redout" when excessive blood flows to the head, and regulating G-suit pressure and/or oxygen flow and pressure is helpful.

### BRIEF DESCRIPTION OF THE DRAWINGS

Figure 1 is a schematic representation of a portion of an aircraft cabin, and a mask worn by a pilot illustrating the use of the sensors of the present invention;
Figure 2 is a schematic representation of the sensor of Figure 1 and circuitry utilized with the sensor;
Figure 3 is a modified form of the invention showing the sensor mounted on the tube leading to the mask; and
Figure 4 is a schematic view of an orifice in the supply tube for the mask with a differential pressure sensor sensing pressure to provide a signal for regulating flow to the mask.

### DETAILED DESCRIPTION OF THE PREFERRED EMBODIMENTS

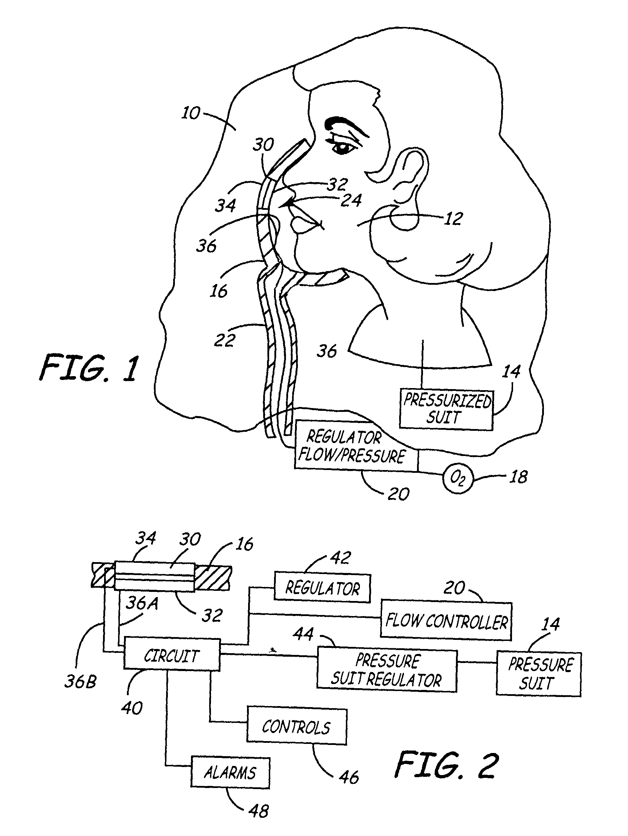

In Figure 1, an aircraft cabin illustrated generally at 10 in which a pilot 12 is operating, is maintained at or above ambient pressure. The cabin pressure may be substantially less than that required for normal activity of the pilot 12. A fighter pilot generally wears a G-suit 14, which is a pressurized suit that maintains pressure on the body in high G environments. A pilot also will wear a mask 16 which carries a flow of oxygen, or an air/gas mixture from an oxygen or gas source 18 through a flow control valve 20 and a connection tube 22 to the interior breathing space or cavity 24 in the mask 16.

It has been discovered that the pressure in the breathing space relative to the pressure in the cabin 10 is an indication of the condition of the pilot, such as alertness, the approaching of a "blackout" condition, or where excessive blood is being supplied to the brain a "red out" condition. By sensing the differential in the pressure between the cabin space and the interior breathing space 24, a true indication of the anticipated condition of the pilot can be obtained and in high G environments, greater amounts of air can be supplied to the pilot.

In this invention, a solid state differential pressure sensor 30, which is of conventional design, is mounted in the mask wall with a first sensing surface 32 open to the interior of the breathing space 24 and a second pressure sensing surface 34 open to the cabin 10 of the aircraft. Solid state differential pressure sensors are available at suitable pressure ranges, and they are very sensitive to changes in differential pressure.

The differential in pressure is sensed, and the signals are provided along a set of lines 36A and 36B, to a sensing circuit 40 (Figure 2) that is of conventional design for determining the differential pressure between the two sides of the sensor.

The circuit 40 will provide signals indicating the differential pressures being sensed. The differential pressure signal can be used for regulating the flow controller 20 so that the amount of oxygen being provided from the source 18 can be changed. Additionally, the flow controller can be used in connection with a pressure regulator 42 that would regulate the pressure of the oxygen, (or an oxygen and air mixture) so that both flow and pressure can be controlled.

The output from the circuit 40 that indicates differential pressure can be used with a pressure controller 44 that controls the pressure to the G-suit 14, to increase or decrease the pressure as necessary for the conditions that are sensed.

Further, the differential pressure sensing signal can be used for operating aircraft controls as indicated at 46, or alarms 48 can be sounded.

The placement of a differential pressure sensor right in the wall of the mask worn by a pilot, such as an oxygen mask, insures that the mask pressure conditions are appropriately interpreted in relation to the cabin pressure. The cabin pressure is reduced at higher altitudes and as the aircraft approaches sea level the pressure increases. The change in cabin pressure is used to relate the conditions to the need for oxygen pressure.

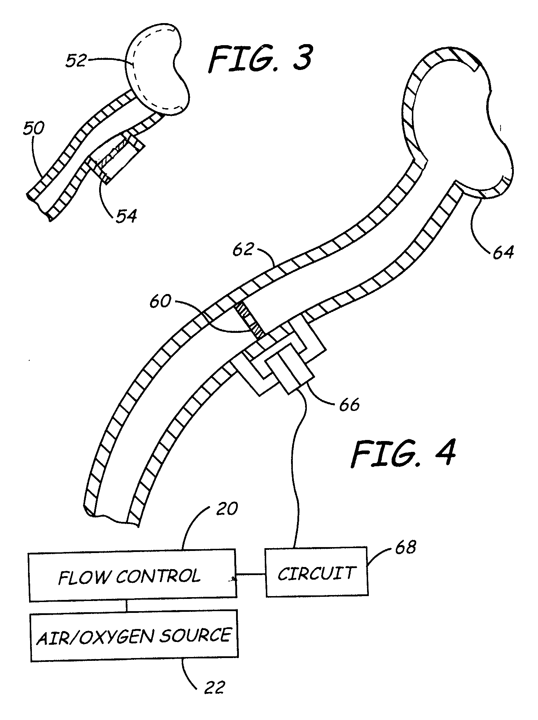

A differential pressure sensor can be mounted on the gas supply tube 50 as shown in Figure 3. The tube leads to a mask 52, and the differential pressure sensor 54 is positioned in the tube wall so the difference in pressure inside the supply tube and ambient conditions is sensed for controlling oxygen and air supply. The controls can be as described before. The differential pressure sensor 54 is also preferably a solid state sensor having a pressure sensitive diaphragm that deflects under pressure differentials.

The masks shown can be a fire fighters full face mask, with the differential pressure sensor mounted as shown in Figures 1-3, and the pressure differential is monitored and provided to an air control from an air tank which keeps the internal pressure of the mask higher than ambient. This will insure purging of smoke from the mask. The mask air supply can be regulated at the proper flow rate to maintain a desired pressure differential.

In Figure 4 a variation of the control is shown. An orifice plate 60 is mounted in a gas supply tube 62 for a mask 64. The orifice plate 60 has an orifice in the center for creating a pressure drop related to flow of gas through the orifice. A differential pressure sensor 66, preferably a solid state differential pressure sensor, is connected to sense the pressure drop across the orifice plate. This differential pressure signal is sensed by a circuit 68, which operates an airflow control 70 to regulate the flow of air or oxygen to the mask from an air or oxygen source 72. The differential pressure sensor circuit can be connected to the processor controller 24 with the inputs provided to determine the flow needed or desired. Sensing differential pressure for controlling the flow, the mixture of gases, and the pressure is accomplished with the present invention.

The pressure sensor mounting is unobtrusive, and does not add significant weight because solid state pressure sensors can be miniaturized. However, very accurate monitoring of conditions is available, for accurate control of the flow of air, oxygen or the like to the pilot.

Although the present invention has been described with reference to preferred embodiments, workers skilled in the art will recognize that changes may be made in form and detail without departing from the spirit and scope of the invention.

## Claims

1. A mask having a mask wall, a gas supply tube with a tube wall connected to the mask to be worn in conditions where pressures on an exterior of the mask and an interior of the mask are to be monitored, a differential pressure sensor mounted on one of the walls, said differential pressure sensor having a sensing surface open to the exterior of the mask, and a second pressure sensing surface open to the interior of the mask to provide a signal indicating differential in pressure between the exterior and interior of the mask.

2. The mask of claim 1, wherein a gas passes through a flow regulator to the gas supply tube, and a sensing circuit controlling the flow regulator in response to the differential in pressure sensed by the sensor.

3. The mask of claim 1 or claim 2, wherein said differential pressure sensor is connected to a circuit to provide a signal indicating differential in pressure, said circuit being connected to control exterior devices for regulating the conditions of a person wearing the mask in response to the signal.

4. The mask of any of the preceding claims, wherein the differential pressure sensor is mounted in and forms a portion of the tube wall.

5. The mask of any of the preceding claims, wherein said differential pressure sensor forms a portion of the wall of the mask, with the sensing surfaces exposed to inner and outer sides of the mask, respectively.

6. A mask for a pilot of high performance aircraft, the mask being configured to fit onto a face of a wearer and having a breath cavity on an interior thereof, a differential pressure sensor mounted in the mask and having two sensing surfaces which sense the differential in pressure between the breath cavity and an exterior of the mask.

7. The oxygen mask of claim 6 and a source of oxygen connected to the breath cavity, a regulator to regulate at least one of flow and pressure from the source of oxygen, and a circuit responsive to the differential pressure sensed for controlling the regulator.

8. The oxygen mask of either of claims 6 or 7 and a pressurized suit having a controller controlled by the circuit.

9. A mask and supply tube having an interior for containing gas for breathing by a wearer, the supply tube being connected to the mask, a supply of a gas connected to the supply tube, a controller for regulating the flow of gas to the interior of the mask, a differential pressure sensor mounted on one of the tube and the mask for providing a signal based upon differentials in pressure indicating flow of gas to the supply tube and mask, the signal being provided to the controller.

10. The mask and supply tube of claim 9, wherein the gas passes through a flow regulator, and a sensing circuit controlling the flow regulator in response to the differential in pressure sensed by the sensor.

11. The mask and supply tube of claim 9 or claim 10, wherein there is an orifice plate positioned in the supply tube, the differential pressure sensor sensing pressure on opposite sides of the orifice plate.
